# EUROPEAN PATENT SPECIFICATION

(11) **EP 3 470 811 B1**
(45) Date of publication and mention of the grant of the patent: **29.04.2020**
(21) Application number: 18200197.4
(22) Date of filing: 12.10.2018
(51) Int. Cl.: G01M 3/02

(54) **DEVICE AND METHOD FOR TESTING INTEGRITY OF GLOVE AND GLOVE PORT OF AN ISOLATOR**
VORRICHTUNG UND VERFAHREN ZUR PRÜFUNG DER INTEGRITÄT EINES HANDSCHUHS UND DER HANDSCHUHÖFFNUNG EINES ISOLATORS
DISPOSITIF ET PROCÉDÉ PERMETTANT DE TESTER L'INTÉGRITÉ D'UN GANT ET D'UN PORT DE GANT D'UN ISOLATEUR

(30) Priority: 13.10.2017 NL 2019728; 16.03.2018 NL 2020599
(43) Date of publication of application: 17.04.2019
(73) Proprietor: Comecer Netherlands B.V., 8501 XC Joure (NL)
(72) Inventor: Bos, Hendrik, 9207 DS Drachten (NL); Douma, Arnold, 8541 AL Akmarijp (NL); Mintjes, Berend, 9201 KD Drachten (NL); Rientstra, Ane Tjitze, 8446 MC Heerenveen (NL)
(74) Representative: Verdijck, Gerardus

(56) References cited:
- FR-A1- 2 873 810
- JP-A- 2016 217 981
- JP-A- 2017 133 899

## Description

The invention relates to a device and a method for testing the integrity of gloves and glove ports of a separative device such as an isolator or similar device.

Separative devices, more often referred to as isolators, glove boxes or hot cells, are devices that are configured for separating an operator from an operation. Such devices are widely used in for example the (radio)pharmaceutical market for performing processes in a controlled environment. To that end, the devices are provided with an inner space in which a controlled atmosphere is realised and in which processes may be performed and/or products may be manipulated. Handling and/or manipulating products and/or processes in the controlled atmosphere can be performed by means of gloves that are connected to the isolator in a glove port. As such, the glove and the glove port form part of the separation barrier and must regularly be tested with respect to their sealing function.

Devices for testing the integrity of gloves of an isolator are known from practice. Such a device usually comprises a housing or body that is provided with a sealing means, a pressure application means and an evaluation unit. In use, these devices, seal against (the inner wall of) the glove port using the sealing means. As a result, the device and the glove positioned in the glove port form an inner space, which can be pressurized and evaluated for leakage.

A disadvantage of the known devices is that the connection between the glove and the glove port is not tested, since the connection is not part of the inner space. As a result, false positives may be achieved in cases in which a leakage is present. Further prior art devices for testing the integrity of gloves of an isolator are described in FR 2 873 810 A1, JP 2017 133899 A and JP 2016 217981 A. The invention aims to obviate or at least reduce the abovementioned disadvantages.

To that end, the invention provides a device according to claim 1.

The device according to the invention provides a test in which the glove and the sealing between the glove and the glove port are included in the inner space on which the test is performed. As a result, the number of false positives can be significantly reduced compared to the known testing devices and the quality of testing is significantly increased.

Another advantage of the device according to the invention is that the sealing between the glove port and the wall of the isolator is also included in the inner space on which the test is performed. Therefore, the device according to the invention allows a single integrated test of the glove, the sealing between the glove and the glove port and the sealing between the glove port and the wall of the isolator. The risk of eliciting false positives is therewith reduced even further. Simultaneously, a separate test of the sealing between the glove part and the wall of the isolator wall is obviated, thus increasing the speed with which the total number of sealings of the isolator can be tested. As a result, the efficiency of testing is improved.

Having an adaptor that is configured to be placed between the housing and the wall of the isolator has the advantage that the housing may be used for testing any type and/or size and/or geometric form of glove and/or glove port by using a variety of differently sized adaptors. As a result, the idle time associated with the device is reduced, leading to a more cost-effective device. Preferably, the first side of the adaptor comprises a flange that is adapted to the size of the glove port, in that an adaptor is specifically designed for a particular size of glove port. Preferably, the second side also is provided with a second flange that is connectable to a standard, predefined housing of a device. The first flange, the second flange or both may be provided with a seal for sealing the adaptor and the housing to the wall of the isolator for forming the inner space. As a result, the housing of the device may be a predetermined standard size, whereas adaptation to the size of the glove port is performed using the adaptor. Due to the fact that the adaptor may be manufactured against lower cost, the total cost of the device are reduced compared to a device according to the invention that is adapted for a single glove port of single type of glove port. In a variant of the adaptor, the adaptor size of the first side of the adaptor is adjustable to allow the first side to be fitted over different sizes of glove ports.

It is noted that the adaptor may be used in conjunction with the device according to the invention or may be used as single adaptor that is coupled with a known device. In essence, the adaptor according to the invention may thus be provided as a stand-alone product that is configured for creating a device according to the invention.

Having an adaptor that is configured to be placed between the housing and the wall of the isolator has the advantage that the housing may be used for testing any type and/or size and/or geometric form of glove and/or glove port by using a variety of differently sized adaptors. As a result, the idle time associated with the device is reduced, leading to a more cost-effective device. Preferably, the first side of the adaptor comprises a flange that is adapted to the size of the glove port, in that an adaptor is specifically designed for a particular size of glove port. Preferably, the second side also is provided with a second flange that is connectable to a standard, predefined housing of a device. The first flange, the second flange or both may be provided with a seal for sealing the adaptor and the housing to the wall of the isolator for forming the inner space. As a result, the housing of the device may be a predetermined standard size, whereas adaptation to the size of the glove port is performed using the adaptor. Due to the fact that the adaptor may be manufactured against lower cost, the total cost of the device are reduced compared to a device according to the invention that is adapted for a single glove port of single type of glove port. In a variant of the adaptor, the adaptor size of the first side of the adaptor is adjustable to allow the first side to be fitted over different sizes of glove ports.

It is noted that the adaptor may be used in conjunction with the device according to the invention or may be used as single adaptor that is coupled with a known device. In essence, the adaptor according to the invention may thus be provided as a stand-alone product that is configured for creating a device according to the invention.

In an embodiment according to the invention, the pressure generating unit may be a fan that is configured for, during operation, pressurizing the inner space.

In known devices, pressurizing the glove is performed using a (small) membrane pump, that preferably is fitted in the housing. Such membrane pumps provide a relatively high pressure and, due to the relatively small size, a low amount of fluid flow (gas or liquid), such as 3 litres of fluid (often air) per minute. As a result, pressurizing the glove may require a relatively long period of time. In case of a glove having a volume of 15 - 30 litres, filling the glove takes a period of 5 - 10 minutes, which takes up a significant portion of total testing time.

Thus, the amount of time that is required for pressurizing the inner space is reduced by using a fan as pressure generating unit. A fan provides a relatively high flow at a low pressure, which is beneficial considering the fact that the pressure test requires a relatively low pressure. A fan having a size that is suitable for placement in the housing, i.e. comparable in size to the existing membrane pumps, may produce a fluid flow of 500 - 1.000 litres per minute. As a result, the period of time that is required for pressurizing the inner space (which may be larger than in existing devices), still requires significantly less time. The pressurization period may be reduced to a period of time of 10 - 15 seconds. As a result, the total testing time (and thus the associated costs) may be significantly reduced.

Another advantage of using a fan is that the manufacturing cost (and replacement cost) of a fan are significantly lower than the cost of a small membrane pump that is used in known devices, which reduces the cost of the device.

Moreover, the combination of a fan as pressure generating unit and the use of an adaptor provides a synergetic effect that it increases the availability of the device and therewith reduces the maintenance cost. As mentioned above, the idle time of the device is reduced by using an adaptor, since it allows the device to be used for testing any type and/or size and/or geometric form of glove and/or glove port. Since the increased use also leads to an increased wear, especially on the pressure generating means, it is necessary to also simultaneously apply a sturdy, easily replaceable and affordable pressure generating means. This object is achieved by combining the adaptor with a fan as pressure generating means, which combination (significantly) reduces idle time and increases availability of the device.The fan according to this embodiment provides a significant advantage in the device according to the invention due to the relatively large inner space (of the glove). It is noted however that the use of the fan for a testing device for isolators is not restricted to the device according to the invention, but may also be used in conjunction with known devices to provide an improvement thereof. The application also encompasses the use of a fan in existing devices.

In an embodiment according to the invention, an end portion of the housing or the adaptor that is connectable to the isolator wall additionally may comprise at least one vacuum port for securing respectively the housing or the adaptor to the wall of the isolator. The vacuum port is also referred to as vacuum chamber.

In a preferred embodiment, the end portion of the housing or the adaptor that is used for connecting the device with the wall of the isolator is provided with at least one vacuum port to provide said connection. Using a vacuum port and a vacuum for securing the device to the wall of the isolator has the advantage that a vacuum provides a connection that is secure and easy to realise. Additional equipment or connection means on the wall of the isolator can be obviated, since the end portion of the housing or the adaptor is placed in direct contact with the wall of the isolator.

In an embodiment according to the invention, the vacuum port may extend along a circumference of the housing or the adaptor.

In a preferred embodiment, the vacuum port extends along a circumference of the end portion of the housing or the adaptor, which has the advantage that the sealing means between the wall of the isolator and the adaptor flange is subjected to a substantially equal pressure.

In an embodiment according to the invention, at least one of the glove or the glove part may be provided with an identification to identify the glove and/or glove part.

Providing identification on the glove and/or glove port has several advantages. First of all, identification of the status of the glove and/or glove port may be recorded and/or evaluated over time. This allows a more structured approach towards testing and/or preventive maintenance of the glove and/or glove port. When it is known that a glove and/or glove port are nearing the end of their projected lifetime, a more severe testing procedure may be performed to establish whether the glove and/or glove port sealings are still functional. Furthermore, it may give rise to preventive maintenance, in which a glove near the projected end-of-life is replaced by a new glove before initiating a test procedure. This reduces the amount of testing that needs to be performed.

Another advantage is that the quality of the glove and/or glove port can be measured and is recorded. This provides insight in the functioning, life time etcetera while simultaneously an increase in the testing time is obviated. Additionally, in case a production batch of gloves is found to be defective, the gloves may easily be tracked (and replaced).

In an embodiment according to the invention, the device may comprise a controller that is configured for controlling the pressure generating unit for automatically regulating the pressure in the inner space.

The device is advantageously provided with a controller for controlling various functions of the device, including the pressure generating unit. This allows automatization of the pressure regulation in the inner space and, subsequently, the testing process as a whole. The controller may in addition also be programmed to control the vacuum port for providing the connection between the device and the wall of the isolator and/or the identification of the glove and/or glove port. The controller preferably is configured to control the complete testing process.

In an embodiment according to the invention, the device is provided with at least one sensor for measuring the pressure in the inner space and/or a sensor for detecting whether a correct connection is made between the wall of the isolator and the device.

The device may be equipped with a number of sensors, each of which is configured to provide input to the controller for controlling and/or evaluating a correct functioning of the device during operation of the device. Preferably this includes measuring the connection between the wall of the isolator and the device and the inner space pressure fluctuations during operation. In an embodiment according to the invention, the device is also provided with an alarm unit for providing an alarm in case a malfunctioning is detected. This may for example be an audible alarm, a visual alarm or any other (combination of) suitable alarms.

In an embodiment according to the invention, the device may comprise one or more of a microprocessor, a communication unit and a storage medium for storing data with regard to pressure, identification or other digital data.

The device may advantageously be provided with a microprocessor and/or communication equipment for storing and/or communicating test results to a storage. The controller may be configured for controlling the microprocessor, communication unit and/or storage medium.

In an embodiment according to the invention, the sealing element may be an inflatable seal.

The advantage of an inflatable seal is that it is more flexible than a rigid sealing element and is especially useful in combination with a vacuum port for connecting the device to the wall of the isolator.

The invention also relates to a system comprising:
- a device according to the invention; and
- a charging and storage dock that is configured to cooperate with the device according to the invention,
wherein the device is connectable to the charging and storage dock for storage and/or charging thereof, and wherein the charging and storage dock is provided with means for connecting the storage dock to a power source.

Preferably, the charging and storage dock comprises an open inner space in which the device is placeable. Furthermore, in a preferred embodiment, the charging and storage dock includes a status indicator for indicating the power status of the device when it is placed in the charging and storage dock.

The system according to the invention has all effects and advantages as mentioned above for the device according to the invention.

The device according to the invention can advantageously be combined with a charging and storage dock, which allows the device to be loaded during transport and/or inactivity. By doing so, the device is at all times ready to use for performing a test, which reduces the testing time. The charging and storage dock may be provided in a vehicle of a testing company to charge the device during travel between testing locations, yet may also be connected to a wall of a testing facility in which the device is regularly used for testing.

The invention also relates to a method for testing a glove and a sealing of a glove and/or a glove port of a separative device such as an isolator, the method comprising the steps defined in claim 10.

The method according to the invention has all the effects and advantages of the device according to the invention and the system according to the invention as mentioned above.

In step vi, if the pressure drop exceeds the pressure drop threshold, the glove is preferably replaced before repeating steps iii to v.

In a presently preferred embodiment, between steps iii of applying pressure and iv of measuring pressure, there is a stabilisation phase in order to obviate thermal effects and glove material stretching during measuring.

In an embodiment of the method according to the invention, the method additionally may comprise the steps of selecting an adaptor that is adapted to the size of the glove port in that it is placeable over the glove port, connecting the selected adaptor to the housing and connecting the adaptor with the isolator wall.

In a preferred embodiment of the method according to the invention, the device is provided with an adaptor that is configured to be placed between the housing of the device and the wall of the isolator and that couples a standard-sized housing to a specific size and shape of glove port. The method according to such preferred embodiment of the invention comprises selecting the correct size of adaptor, which preferably is provided with a flange that is connectable to the wall of the isolator, and subsequently connecting the adaptor to the housing and the wall of the isolator. This embodiment of the method according to the invention allows a testing operator to use a single testing device and a number of different adaptors for testing a wide range of glove ports that may have different sizes and/or shapes. As a result, the method according to the invention allows a testing operator to carry only a limited number of tools, i.e. one testing device and a number of different adaptors, and still be able to test all glove ports in a facility. The method according to the invention therewith achieves a more efficient and cost-effective testing process.

In an embodiment of the method according to the invention, the step of connecting the housing with the isolator wall may comprise placing the housing on the isolator wall or connecting the adaptor with the housing and placing the adaptor on the isolator wall, and establishing a vacuum in the vacuum chamber to connect respectively the housing or the adaptor to the isolator wall.

In an embodiment of the method according to the invention, the steps iii - vi may be performed by a controller.

Preferably, the steps applying, measuring and relieving pressure to the inner space is automated by using a controller. This ensures that the testing process is performed uniformly and efficiently. Moreover, the testing process is independent from the operator of the device, which increases the quality of the test.

In an embodiment of the method according to the invention, the method may additionally comprise the steps of identifying the identification on the glove and/or on the glove port, transmitting the identification and a result of the pressure measurement to a storage medium and/or a remote device, and storing the identification and the result to the storage medium and/or the remote device. The identification is preferably coupled to the results such that an audit trail is achieved.

The method may additionally comprise several other steps alone or in combination that provide the advantage of having a more detailed and structured testing process that is codified and stored. This increases the quality and efficiency of the testing process and also provides insight in the performance of the glove and the sealings in subsequent tests. As a result, a track record of the glove, glove port and the associated sealings is acquired that may be used to improve the products and/or identify defective products in a structured manner.

Further advantages, features and details of the invention are elucidated on the basis of preferred embodiments thereof, wherein reference is made to the accompanying drawings, in which:
- Figure 1 shows a perspective view of an example of a device according to the invention;
- Figure 2 shows a perspective view of the device of figure 1 when coupled with an adaptor;
- Figure 3 shows a perspective view of the device of figure 1 when coupled with an adaptor and the isolator;
- Figure 4 shows cross-sectional view of the device of figure 3;
- Figure 5 shows an enlarged view of a section of figure 4; and
- Figure 6 shows a schematic example of several features that can be (partially) incorporated in a housing of the device.

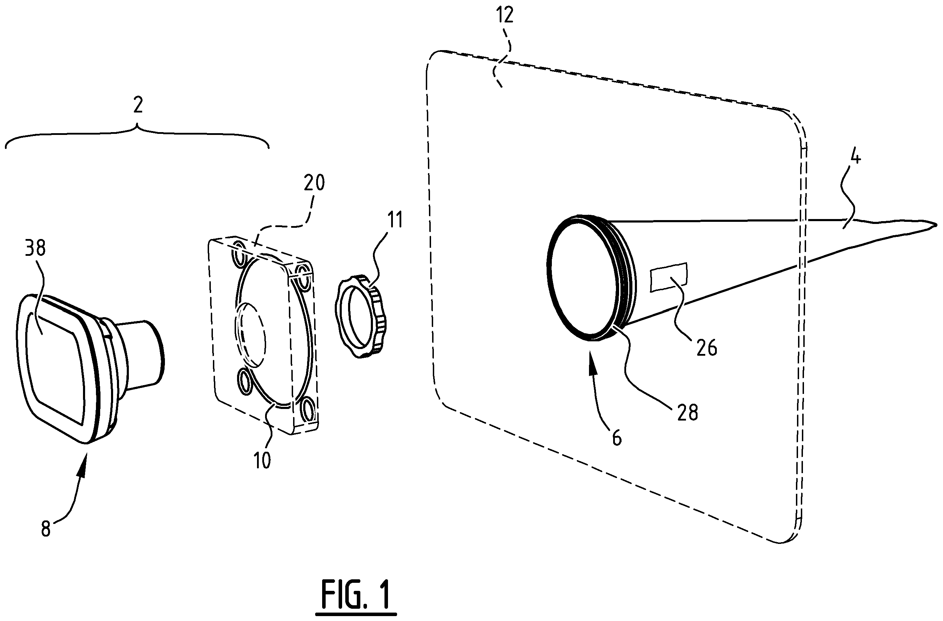

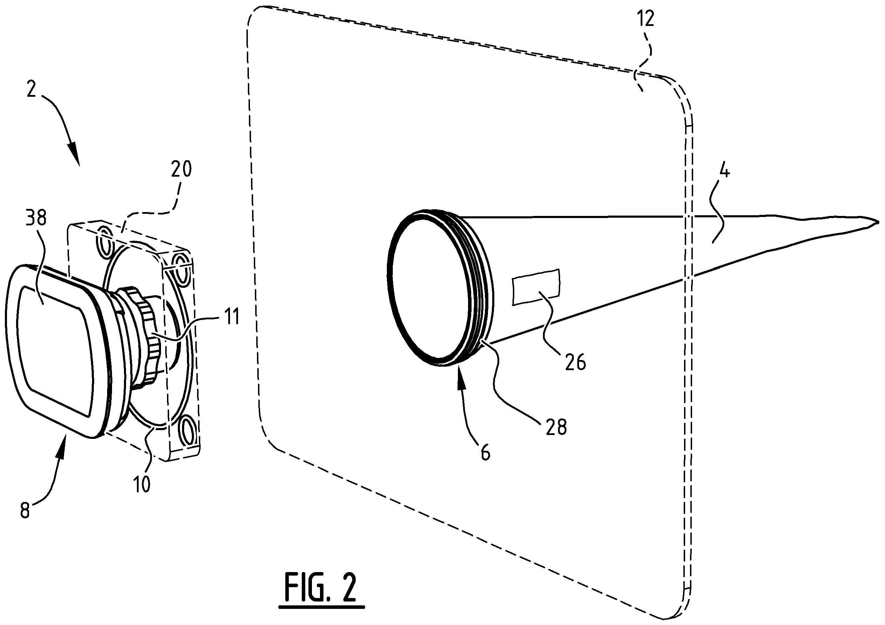

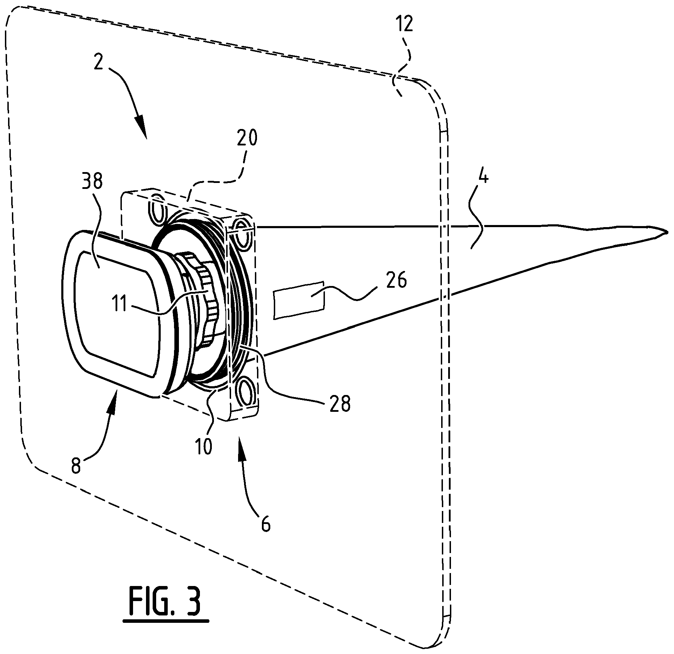

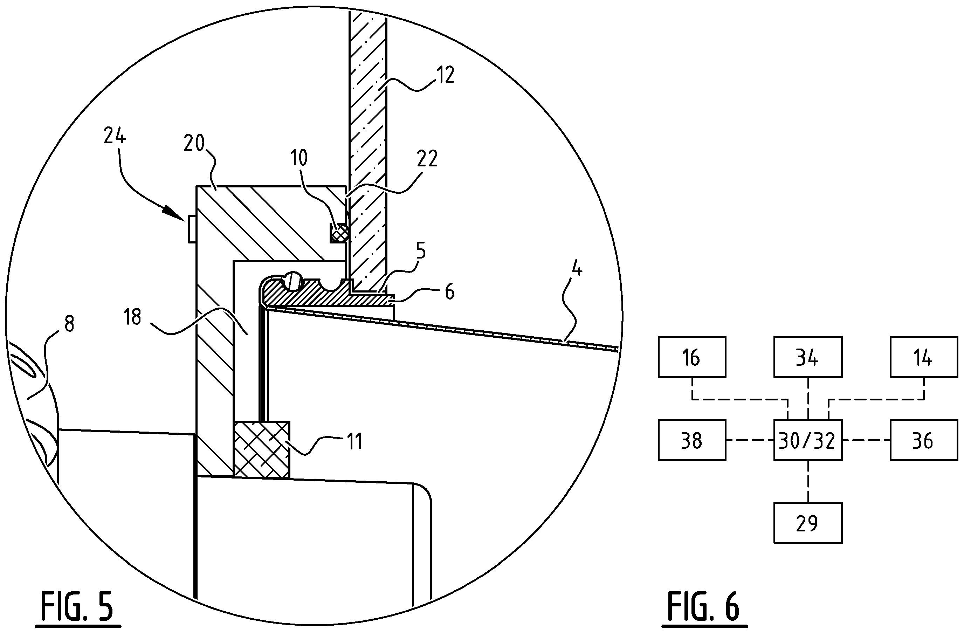

Device 2 is configured for testing glove 4 and a sealing between glove 4 and glove port 6 as well as a sealing between glove port 6 and isolator wall 12 (see figures 1-3). In use, device 2 is placed over glove port 6 (figure 3). In the shown example, device 2 is provided with adaptor 20 that forms the connection between housing 8 and isolator wall 12. Adaptor 20 is in this example connected to housing 8 by means of nut 11. The connection may also be provided by any other suitable means known to the skilled person. Adaptor 20 is in this example provided as a substantially square adaptor having a flange that is connected to isolator wall 12 by means of a vacuum port 24 that extends along the circumference of an end portion of adaptor 20 that is facing isolator wall 12 (see figure 5). In this example, device 2 is provided with controller 30, which comprises microprocessor 34, and with communication unit 34, storage medium 36 and display 38. Microprocessor 34 is operatively connected to each of communication unit 34, storage medium 36 and display 38 (see figure 6).

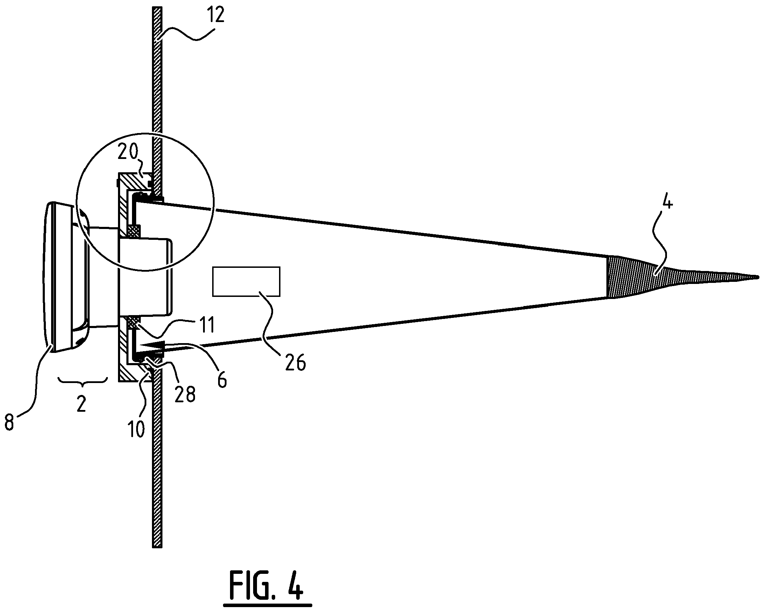

When placed over glove port 6, device 2 cooperates with glove 4 and isolator wall 12 to form inner space 18, which is a sealed space by means of sealing element 10. As can clearly be seen in figure 4 and figure 5, the complete inner area of glove 4, the sealing between glove 4 and glove port 6 and sealing 5 between glove port 6 and isolator wall 12 are encompassed in inner space 18. As a result, during testing each of the sealings is tested for leakage, providing an integral test of all sealings. This reduces testing time and also reduces the number of false positives that result from the limited test performed with known devices.

Adaptor 20 (figures 4 and 5) is in this example provided with adaptor flange 22 that is adapted to the size of glove port 6 in that the circumference of adaptor flange 22 is larger that the circumference of glove port 6 so that it can be placed over glove port 6. Several different options are available for connecting adaptor 20 and housing 8, which include a screw or bolt connection, a magnetic connection, a vacuum connection or any other suitable means of connection. Preferably, a magnetic or a vacuum-based connection are used, since these are easy to connect and disconnect and provide a stable connection. Furthermore, at least one of housing 8 and adaptor 20 is provided with a sealing element for providing a sealing connection between housing 8 and adaptor 20.

Adaptor 20 may additionally be provided with several other features, which are schematically represented in figures 1-5 and specifically figure 6. In these examples, adaptor flange 22 of adaptor 20 is provided with vacuum port 24, which extends over substantially the entire circumference of adaptor flange 22. Furthermore, glove 4 and glove port 6 are both provided with identification tags 26, 28 that is readable by reading device 29 that is located in or on housing 8. Housing 8 of adaptor 2 is also provided with controller 30, which in this case comprises microprocessor 32. Microprocessor 32 is operatively connected with communication unit 34, storage medium 36 and display 38, all of which are preferably provided at least partially in housing 8 of device 2 in this particular example. The position of the different elements mentioned and the number and nature of the mentioned elements are not restrictive and other elements for providing additional functions and functionality may be added.

During operation, housing 8 of device 2 is coupled with adaptor 20 that is suitable for placement over glove port 6. After placing adaptor 20 over glove port 6, a vacuum is applied to vacuum port 24 for sealing device 2 against isolator wall 12. During placing or, alternatively, shortly before placing, identification of glove 26 and/or identification of glove port 28 are read and stored in storage medium 36. Additionally, identifications 26, 28 may be sent to a remote device using communication unit 34 and/or provided on display 38. Controller 30, which in this example comprises microprocessor 32, subsequently instructs pressure generating unit 14 to apply a measuring pressure and controls sensors for performing measurements on the pressure drop after reaching the measuring pressure. Furthermore, controller 30 instructs pressure generating unit 14 to relieve pressure after measuring. After relieving the vacuum from vacuum port 24, device 2 can be decoupled from isolator wall 12 and used for a new test on a different glove port.

The present invention is by no means limited to the above described preferred embodiments thereof. The rights sought are defined by the following claims within the scope of which many modifications can be envisaged.

## Claims

1. Device (2) for testing a glove (4) and a sealing/integrity of a glove (4) and/or a glove port (6) of a separative device such as an isolator, the device (2) comprising:
- a housing (8);
- a sealing element (24) that is operatively connected to the housing (8) and that is configured for sealingly connecting the device (2) with a wall (12) of the isolator in which the glove port (6) is positioned;
- a pressure generating unit (14); and
- a measuring unit;
wherein the device (2) is placeable over a glove port (6) of an isolator and wherein, in use, the device (2), the wall (12) of the isolator, the glove (4) and the glove port (6) form an inner space (18) that is substantially hermetically sealed, wherein the device (2) additionally comprises an adaptor (20), which is configured for connecting the housing (8) to the wall (12) of the isolator, wherein a first side of the adaptor (20) comprises a flange (22) that is sealingly connectable to the wall (12) of the isolator and has a surface area that is adapted to the size of the glove port (6) in that it is placeable over the glove port (6),
**characterized in that**
a second, opposite side of the adaptor is sealingly removably connectable to the housing (8) of the device (2).

2. Device according to claim 1, wherein the housing (8) has a surface area that is adapted to the size of the glove port (6) in that it is placeable over the glove port (6) and, in use, is in direct or indirect sealing contact with the wall (12) of the isolator for forming the inner space (18).

3. Device according to any one of the preceding claims, wherein the pressure generating unit (14) is a fan (14) that is configured for, during operation, pressurizing the inner space (18).

4. Device according to any one of the preceding claims, wherein the housing (8) or, when dependent on claim 3, the adaptor flange (22) is provided with an end portion that is connectable to the isolator wall (12), wherein the end portion comprises at least one vacuum port (24).

5. Device according to claim 4, wherein the vacuum port (24) extends along a circumference of the end portion.

6. Device according to any one of the preceding claims, wherein the device (2) comprises a reading device (29) that is configured for reading an identification (26, 28) of a glove (4) and/or a glove port (6) to respectively identify the glove (4) and/or glove port (6).

7. Device according to any one of the preceding claims, wherein the device (2) comprises a controller (30) that is configured for controlling the pressure generating unit (14) for automatically regulating the pressure in the inner space (18).

8. Device (2) according to any one of the preceding claims, the device comprises:
- a microprocessor (32); and
- a communication unit (34) and/or
- a storage medium (36) for storing data with regard to pressure, identification or other digital data.

9. Device according to any one of the preceding claims, wherein the sealing element is an inflatable seal.

10. Method for testing an integrity and/or sealing of a glove and/or a glove port of a separative device such as an isolator, the method comprising the steps of:
i. providing a device according to any one of the preceding claims;
ii. connecting the housing with the isolator wall, wherein the connecting comprises:
- selecting an adaptor that is adapted to the size of the glove port in that it is placeable over the glove port;
- removably connecting the selected adaptor to the housing; and
- connecting the adaptor with the isolator wall;
iii. applying pressure to the inner space; and
iv. measuring pressure over a predetermined period of time;
v. relieving pressure; and
vi. determining or computing whether a measured pressure drop exceeds a pressure drop threshold, and:
- if the pressure drop exceeds the pressure drop threshold, at least once repeating steps iii to v; or
- if the pressure drop is below the pressure drop threshold, removing the device.

11. Method according to claim 10, wherein the step of connecting the housing with the isolator wall comprises:
- establishing a vacuum in the vacuum chamber to connect the adaptor to the isolator wall.

12. Method according to any of the preceding claims 10 - 11, wherein the steps iii - vi are performed by a controller.

13. Method according to any one of the preceding claims 10 - 12, wherein the method additionally comprises the steps of:
- identifying the identification on the glove and/or on the glove port;
- transmitting the identification and a result of the pressure measurement to a storage medium and/or a remote device; and
- storing the identification and the result to the storage medium and/or the remote device.

## Patentansprüche

1. Vorrichtung (2) zum Testen eines Handschuhs (4) und einer Abdichtung/Integrität eines Handschuhs (4) und/oder einer Eingriffsöffnung (6) einer Trennvorrichtung wie einer Isolationsvorrichtung, wobei die Vorrichtung (2) aufweist:
- ein Gehäuse (8);
- ein Abdichtungselement (24), das betriebsfähig mit dem Gehäuse (8) verbunden ist und das ausgestaltet ist, um die Vorrichtung (2) mit einer Wand (12) der Isolationsvorrichtung abdichtend zu verbinden, in der die Eingriffsöffnung (6) angeordnet ist;
- eine Druckerzeugungseinheit (14); und
- eine Messeinheit;
wobei die Vorrichtung (2) über einer Eingriffsöffnung (6) einer Isolationsvorrichtung anordenbar ist und wobei in Gebrauch die Vorrichtung (2), die Wand (12) der Isolationsvorrichtung, der Handschuh (4) und die Eingriffsöffnung (6) einen Innenraum (18) bilden, der im Wesentlichen hermetisch abgedichtet ist, wobei die Vorrichtung (2) darüber hinaus einen Adapter (20) aufweist, der ausgestaltet ist, um das Gehäuse (8) mit der Wand (12) der Isolationsvorrichtung zu verbinden, wobei eine erste Seite des Adapters (20) einen Flansch (22) aufweist, der in abdichtender Weise mit der Wand (12) der Isolationsvorrichtung verbindbar ist und eine Oberfläche hat, die an die Größe der Eingriffsöffnung (6) dahingehend angepasst ist, dass sie über der Eingriffsöffnung (6) anordenbar ist,
**dadurch gekennzeichnet, dass**
eine zweite gegenüberliegende Seite des Adapters in abdichtender Weise entfernbar mit dem Gehäuse (8) der Vorrichtung (2) verbindbar ist.

2. Vorrichtung nach Anspruch 1, wobei das Gehäuse (8) eine Oberfläche hat, die an die Größe der Eingriffsöffnung (6) dahingehend angepasst ist, dass sie über der Eingriffsöffnung (6) anordenbar ist und in Gebrauch in direkten oder indirekten Abdichtungskontakt mit der Wand (12) der Isolationsvorrichtung steht, um den Innenraum (18) zu bilden.

3. Vorrichtung nach einem der vorhergehenden Ansprüche, wobei die Druckerzeugungseinheit (14) ein Ventilator (14) ist, der ausgestaltet ist, um den Innenraum (18) während des Betriebs unter Druck zu setzen.

4. Vorrichtung nach einem der vorhergehenden Ansprüche, wobei das Gehäuse (8) oder, wenn von Anspruch 3 abhängig, der Adapterflansch (22) mit einem Endbereich vorgesehen ist, der mit der Isolationsvorrichtungswand (12) verbindbar ist, wobei der Endbereich wenigstens eine Vakuumöffnung (24) aufweist.

5. Vorrichtung nach Anspruch 4, wobei die Vakuumöffnung (24) um einen Umfang des Endbereichs verläuft.

6. Vorrichtung nach einem der vorhergehenden Ansprüche, wobei die Vorrichtung (2) eine Lesevorrichtung (29) aufweist, die ausgestaltet ist, um eine Kennung, 26, 28) eines Handschuhs (4) und/oder einer Eingriffsöffnung (6) zu lesen, um jeweils den Handschuh (4) und/oder die Eingriffsöffnung (6) zu identifizieren.

7. Vorrichtung nach einem der vorhergehenden Ansprüche, wobei die Vorrichtung (2) eine Steuereinheit (30) aufweist, die ausgestaltet ist, um die Druckerzeugungseinheit (14) zu steuern, um den Druck im Innenraum (18) automatisch zu regeln.

8. Vorrichtung (2) nach einem der vorhergehenden Ansprüche, wobei die Vorrichtung aufweist:
- einen Mikroprozessor (32); und
- eine Kommunikationseinheit (34) und/oder
- ein Speichermedium (36), um Daten bezüglich des Drucks, der Kennung oder andere digitale Daten zu speichern.

9. Vorrichtung nach einem der vorhergehenden Ansprüche, wobei das Abdichtungselement eine aufblasbare Abdichtung ist.

10. Verfahren zum Testen einer Integrität und/oder Abdichtung eines Handschuhs und/oder einer Eingriffsöffnung einer Trennvorrichtung wie einer Isolationsvorrichtung, wobei das Verfahren die Schritte aufweist:
i. Vorsehen einer Vorrichtung nach einem der vorhergehenden Ansprüche,
ii. Verbinden des Gehäuses mit der Isolationsvorrichtungswand, wobei das Verbinden aufweist:
- Auswählen eines Adapters, der an die Größe der Eingriffsöffnung dahingehend angepasst ist, dass er über der Eingriffsöffnung anordenbar ist;
- entfernbares Verbinden des ausgewählten Adapters mit dem Gehäuse; und
- Verbinden des Adapters mit der Isolationswand;
iii. Anlegen von Druck an den Innenraum; und
iv. Messen eines Drucks über eine bestimmte Zeitspanne;
v. Lösen des Drucks; und
vi. Bestimmen oder Berechnen, ob ein gemessener Druckabfall einen Druckabfallgrenzwert überschreitet, und:
- wenn der Druckabfall den Druckabfallgrenzwert überschreitet, die Schritte iii bis v wenigstens einmal zu wiederholen; oder
- wenn der Druckabfall unter dem Druckabfallgrenzwert liegt, die Vorrichtung zu entfernen.

11. Verfahren nach Anspruch 10, wobei der Schritt des Verbindens des Gehäuses mit der Isolationsvorrichtungswand aufweist:
- Aufbauen eines Vakuums in der Vakuumkammer, um den Adapter mit der Isolationswand zu verbinden.

12. Verfahren nach einem der vorhergehenden Ansprüche 10 bis 11, wobei die Schritte iii bis vi durch eine Steuereinheit durchgeführt werden.

13. Verfahren nach einem der vorhergehenden Ansprüche 10 bis 12, wobei das Verfahren weiterhin die Schritte aufweist:
- Identifizieren der Kennung am Handschuh und/oder an der Eingriffsöffnung;
- Übertragen der Kennung und eines Ergebnisses der Druckmessung an ein Speichermedium und/oder eine entfernte Vorrichtung; und
- Speichern der Kennung und des Ergebnisses auf dem Speichermedium und/oder der entfernten Vorrichtung.

## Revendications

1. Dispositif (2) pour tester un gant (4) et une étanchéité/intégrité d'un gant (4) et/ou un orifice à gant (6) d'un dispositif séparatif tel qu'un isolateur, le dispositif (2) comprenant :
- un boîtier (8) ;
- un élément d'étanchéité (24) qui est raccordé de manière fonctionnelle au boîtier (8) et qui est configuré pour être raccordé de manière étanche au dispositif (2) avec une paroi (12) de l'isolateur dans laquelle l'orifice à gant (6) est positionné ;
- une unité de génération de pression (14) ; et
- une unité de mesure ;
dans lequel le dispositif (2) peut être placé sur un orifice à gant (6) d'un isolateur et dans lequel, en cours d'utilisation, le dispositif (2), la paroi (12) de l'isolateur, le gant (4) et l'orifice à gant (6) forment un espace intérieur (18) qui est rendu sensiblement étanche et hermétique, dans lequel le dispositif (2) comprend en plus un adaptateur (20), qui est configuré pour raccorder le boîtier (8) à la paroi (12) de l'isolateur,
dans lequel un premier côté de l'adaptateur (20) comprend une bride (22) qui peut être raccordée de manière étanche à la paroi (12) de l'isolateur et qui a une superficie qui est adaptée à la taille de l'orifice à gant (6) en ce qu'elle peut être placée sur l'orifice à gant (6),
**caractérisé en ce qu'**un second côté opposé de l'adaptateur peut être raccordé de manière étanche et amovible au boîtier (8) du dispositif (2).

2. Dispositif selon la revendication 1, dans lequel le boîtier (8) a une superficie qui est adaptée à la taille de l'orifice à gant (6) en ce qu'il peut être placé sur l'orifice à gant (6) et, en cours d'utilisation, est en contact étanche direct ou indirect avec la paroi (12) de l'isolateur pour former l'espace intérieur (18).

3. Dispositif selon l'une quelconque des revendications précédentes, dans lequel l'unité de génération de pression (14) est un ventilateur (14) qui est configuré pour, en fonctionnement, mettre l'espace intérieur (18) sous pression.

4. Dispositif selon l'une quelconque des revendications précédentes, dans lequel le boîtier (8) ou, lorsqu'elles dépendent de la revendication 3, la bride (22) d'adaptateur, est pourvu d'une partie d'extrémité qui peut être raccordée à la paroi d'isolateur (12), dans lequel la partie d'extrémité comprend au moins un orifice à vide (24).

5. Dispositif selon la revendication 4, dans lequel l'orifice à vide (24) s'étend le long d'une circonférence de la partie d'extrémité.

6. Dispositif selon l'une quelconque des revendications précédentes, dans lequel le dispositif (2) comprend un dispositif de lecture (29) qui est configuré pour lire une identification (26, 28) d'un gant (4) et/ou d'un orifice à gant (6) pour identifier respectivement le gant (4) et/ou l'orifice à gant (6).

7. Dispositif selon l'une quelconque des revendications précédentes, dans lequel le dispositif (2) comprend un dispositif de commande (30) qui est configuré pour commander l'unité de génération de pression (14) pour réguler automatiquement la pression dans l'espace intérieur (18).

8. Dispositif (2) selon l'une quelconque des revendications précédentes, le dispositif comprend :
- un microprocesseur (32) ; et
- une unité de communication (34) et/ou
- un support de stockage (36) pour stocker des données en matière de pression, d'identification ou d'autres données numériques.

9. Dispositif selon l'une quelconque des revendications précédentes, dans lequel l'élément d'étanchéité est un joint d'étanchéité gonflable.

10. Procédé pour tester une intégrité et/ou une étanchéité d'un gant et/ou un orifice à gant d'un dispositif séparatif tel qu'un isolateur, le procédé comprenant les étapes suivantes :
i. fournir un dispositif selon l'une quelconque des revendications précédentes ;
ii. raccorder le boîtier à la paroi d'isolateur, dans lequel le raccordement comprend :
- la sélection d'un adaptateur qui est adapté à la taille de l'orifice à gant en ce qu'il peut être placé sur l'orifice à gant ;
- le raccordement amovible de l'adaptateur sélectionné au boîtier ; et
- le raccordement de l'adaptateur à la paroi d'isolateur ;
iii. appliquer une pression à l'espace intérieur ; et
iv. mesurer la pression pendant une période de temps prédéterminée ;
v. relâcher la pression ; et
vi. déterminer ou calculer si une chute de pression mesurée dépasse une chute de pression seuil, et :
- si la chute de pression dépasse la chute de pression seuil, répéter des étapes iii à v au moins une fois ; ou
- si la chute de pression est en dessous de la chute de pression seuil, retirer le dispositif.

11. Procédé selon la revendication 10, dans lequel l'étape de raccordement du boîtier à la paroi d'isolateur comprend :
- l'établissement d'un vide dans la chambre à vide pour raccorder l'adaptateur à la paroi d'isolateur.

12. Procédé selon l'une quelconque des revendications précédentes 10 et 11, dans lequel les étapes iii à vi sont réalisées par un dispositif de commande.

13. Procédé selon l'une quelconque des revendications précédentes 10 à 12, dans lequel le procédé comprend en plus les étapes suivantes :
- identifier l'identification sur le gant et/ou sur l'orifice à gant ;
- transmettre l'identification et un résultat de la mesure de pression à un support de stockage et/ou un dispositif distant ; et
- stocker l'identification et le résultat sur le support de stockage et/ou le dispositif distant.
